# EUROPÄISCHE PATENTSCHRIFT

(11) **EP 4 062 809 B1**
(45) Veröffentlichungstag und Bekanntmachung des Hinweises auf die Patenterteilung: **07.05.2025**
(21) Anmeldenummer: 22160419.2
(22) Anmeldetag: 07.03.2022
(51) Int. Cl.: A47J 31/44

(54) **MILCHSCHÄUMER UND HEISSGETRÄNKEZUBEREITUNGSEINRICHTUNG**
MILK FOAMING AGENT AND HOT BEVERAGE PREPARATION DEVICE
DISPOSITIF DE MOUSSAGE DE LAIT ET DISPOSITIF DE PRÉPARATION DE BOISSONS CHAUDES

(30) Priorität: 23.03.2021 DE 102021202788
(43) Veröffentlichungstag der Anmeldung: 28.09.2022
(73) Patentinhaber: BSH Hausgeräte GmbH, 81739 München (DE)
(72) Erfinder: Eder, Florian, 83132 Pittenhart (DE); Hauser, Andreas, 83413 Fridolfing (DE); Leonhardt, Ronny, 70839 Gerlingen (DE); Sollmann, Martin, 83278 Traunstein (DE); Steininger, Benedikt, 83253 Rimsting (DE)

(56) Entgegenhaltungen:
- EP-A1- 3 708 039
- WO-A1-2021/032863
- DE-C1- 19 611 450

## Beschreibung

Die Erfindung betrifft einen Milchschäumer sowie eine Heißgetränkezubereitungseinrichtung mit einem solchen Milchschäumer.

Aus der DE 196 11 450 C1 und der EP 3 708 039 A1 sind verschiedene Milchschäumer sowie Heißgetränkezubereitungseinrichtungen mit solchen Milchschäumern bekannt.

Heißgetränkezubereitungseinrichtungen wie Kaffeevollautomaten werden seit geraumer Zeit mit Milchschäumern ausgestattet, mittels welcher Milch zu Milchschaum aufgeschäumt werden kann. Das Aufschäumen der Milch im Milchschäumer erfolgt dabei typischerweise durch Vermengen eines Gemischs aus Luft und Milch mit Wasserdampf, welcher zum Fördern des Gemischs aus Luft und Milch als Treibmedium einer Strahlpumpe des Milchschäumers verwendet wird. Der Wasserdampf dient dabei zugleich zum Erwärmen des Gemischs aus Luft und Milch auf eine Schäumtemperatur. Der Wasserdampf wird üblicherweise mittels eines Heizers der Heißgetränkezubereitungseinrichtung erzeugt und der Strahlpumpe des Milchschäumers zugeführt. Dabei ist eine Konsistenz und Qualität, sprich eine Beschaffenheit, des Milchschaums typischerweise durch vorgegebene geometrische Parameter des Milchschäumers, insbesondere seiner Strahlpumpe, dauerhaft festgelegt.

Nachteilig kann mittels solcher herkömmlicher Milchschäumer also die Konsistenz und Qualität des Milchschaums nicht oder zumindest nur in sehr geringem Maße an variierende Konsumentenwünsche angepasst werden.

Es ist daher eine Aufgabe der vorliegenden Erfindung, für Milchschäumer sowie für Heißgetränkezubereitungseinrichtungen mit einem solchen Milchschäumer - insbesondere zur Beseitigung des voranstehend genannten Nachteils - neue Wege aufzuzeigen.

Diese Aufgabe wird durch die Gegenstände des unabhängigen Anspruchs 1 und des nebengeordneten Patentanspruchs 10 gelöst. Bevorzugte Ausführungsformen sind Gegenstand der abhängigen Patentansprüche.

Grundidee der Erfindung ist demnach, einen Milchschäumer für eine Heißgetränkezubereitungseinrichtung bzw. einer Heißgetränkezubereitungseinrichtung mit einer verstellbaren Justiereinrichtung zu versehen, mittels welcher eine Beschaffenheit des Milchschaums variiert werden kann. Diese Justiereinrichtung dient insbesondere zum Manipulieren geometrischer Parameter einer Strahlpumpe des Milchschäumers.

Vorteilhaft kann so die Beschaffenheit des Milchschaums - die wenigstens durch eine Konsistenz und Qualität desselben beschreibbar ist - variabel auf unterschiedliche Konsumentenwünsche abgestimmt werden.

Ein erfindungsgemäßer Milchschäumer zum Aufschäumen von Milch für eine Heißgetränkezubereitungseinrichtung, insbesondere für einen Kaffeevollautomaten, umfasst eine Strahlpumpe mit einer Treibdüse, wobei im Betrieb des Milchschäumers mittels der Treibdüse Wasserdampf als Treibmedium der Strahlpumpe in Form eines entlang einer Strahlrichtung austragbaren Treibstrahls entspannbar ist. Dabei kann mittels des Milchschäumers Milch in Form von Tiermilch - insbesondere Kuhmilch - oder Ersatzmilch - insbesondere Soja-, Hafer-, Reis-, Mandelmilch - aufgeschäumt werden. Die Strahlpumpe weist eine sich entlang der Strahlrichtung verjüngende Fangdüse zum Fangen des Treibstrahls auf, wobei die Fangdüse wenigstens teilweise eine Mischkammer des Milchschäumers begrenzt. Dabei mündet ein Sauganschluss der Strahlpumpe, insbesondere quer zur Strahlrichtung, in die Mischkammer, sodass in der Mischkammer der Wasserdampf des Treibstrahls und ein mittels der Strahlpumpe ansaugbares Gemisch aus Milch und Luft unter Erzeugung des Milchschaums vermengbar sind. Dabei ist ein Luftkanal und ein Milchbehälter zur Aufnahme von Milch und/oder ein Milchkanal an den Sauganschluss der Strahlpumpe fluidisch angeschlossen. Eine anteilige Zusammensetzung des Gemischs aus Milch und Luft oder/und ein Massenstrom des Gemischs können mittels einer oder mehrerer Ventileinrichtungen einstellbar sein. Der Milchschäumer weist ferner eine zum Variieren einer Beschaffenheit des Milchschaums, insbesondere manuell oder mechanisch oder hydromechanisch, verstellbare Justiereinrichtung auf. Vorteilhaft erlaubt es ein solcher Milchschäumer, Milchschaum verschiedenster Beschaffenheit zu erzeugen, sodass vielfältige Konsumentenwünsche an die Qualität und Konsistenz des Milchschaums erfüllt werden können. Vorteilhaft können mittels der Justiereinrichtung die geometrischen Parameter der Strahlpumpe bzw. der Mischkammer alternativ oder zusätzlich an von einem Milchtyp sowie Eigenschaften wie Fett- oder/und Proteingehalt der Milch abhängige Erfordernisse für ihr Aufschäumen angepasst werden.

Zweckmäßig schließt sich der Treibdüse abgewandt ein Austragsteil zum Austragen von Milchschaum an die Milchkammer fluidisch an. Das Austragsteil kann einen Schaumverteiler ausbilden, mittels welchem in der Mischkammer erzeugter Milchschaum auf wenigstens eine Austragsöffnung, bevorzugt zwei Austragsöffnungen, des Austragsteils verteilbar ist. Mittels des Austragsteils kann eine Strömung an Milchschaum stromab der Strahlpumpe und der Mischkammer, beruhigt werden, bevor der Milchschaum den Milchschäumer über die Austragsöffnung verlässt. Außerdem kann bei wenigstens zwei Austragsöffnungen gleichzeitig eine der Anzahl an Austragöffnungen entsprechende Anzahl an Konsumgefäßen simultan mit Milchschaum bestückt werden.

Bei einer bevorzugten Weiterbildung des Milchschäumers ist ein zwischen der Treibdüse und der Fangdüse entlang der Strahlrichtung gemessener Düsenabstand mittels der Justiereinrichtung veränderbar ausgebildet. Eine solche Justiereinrichtung lässt sich technisch besonders einfach umsetzen. Zugleich baut ein derart weitergebildeter Milchschäumer quer zur Strahlrichtung besonders kompakt.

Gemäß einer weiteren vorteilhaften Weiterbildung des Milchschäumers erstreckt sich die Mischkammer entlang der Strahlrichtung über eine mittels der Justiereinrichtung veränderbare Kammerhöhe. Auch ein solcher Milchschäumer benötigt quer zur Strahlrichtung besonders wenig Bauraum. Außerdem besticht ein derartiger Milchschäumer in besonders geringen Herstellungskosten und großer Robustheit.

Bei einer weiteren bevorzugten Weiterbildung des Milchschäumers ist vorgesehen, dass die Fangdüse zumindest bereichsweise mit oder aus einem flexiblen Material ausgebildet ist, so dass mittels der Justiereinrichtung eine Geometrie der Fangdüse durch wenigstens bereichsweise Deformation der Fangdüse verändert werden kann. Die Fangdüse kann die Form eines Schalltrichters einer Trompete oder eines sonstigen Blasinstruments aufweisen, dessen Krümmung bei der Deformation verändert wird. Dies erlaubt ein besonders präzises Anpassen der Beschaffenheit des Milchschaums an den Konsumentenwunsch.

Eine weitere bevorzugte Weiterbildung des Milchschäumers sieht vor, dass die Justiereinrichtung einen Ring umfasst, dessen Rotationssymmetrieachse parallel zur Strahlrichtung verläuft. Dabei fasst der Ring die Fangdüse eine Engstelle der Fangdüse festlegend ein. Eine Position des Rings der Justiereinrichtung relativ zur Fangdüse ist entlang der Strahlrichtung verstellbar, sodass eine Position der Engstelle in der Fangdüse bezüglich der Strahlrichtung mittels der Justiereinrichtung veränderbar ist. Ein solcher Milchschäumer baut sowohl entlang der Strahlrichtung als quer zur Strahlrichtung besonders kompakt.

Zweckmäßig kann die Engstelle mittels der Justiereinrichtung wahlweise einschnürbar und entschnürbar sein. Somit kann die zu erzielende Beschaffenheit des Milchschaums noch genauer eingestellt werden.

Bei einer weiteren vorteilhaften Weiterbildung des Milchschäumers ist zur Veränderung der Geometrie der Fangdüse die Fangdüse mittels der Justiereinrichtung entlang der Strahlrichtung wahlweise dehn- oder stauchbar ausgebildet. Ein derartiger Milchschäumer lässt sich technisch besonders einfach umsetzen.

Gemäß einer weiteren bevorzugten Weiterbildung des Milchschäumers ist mittels der Justiereinrichtung eine zur Fangdüse relative Position der Treibdüse quer zur Strahlrichtung veränderbar. Somit können entlang der Strahlrichtung vorgegebenen Grenzen, die einen Bauraum für den Milchschäumer entlang der Strahlrichtung festlegen, besonders gut eingehalten werden.

Zweckmäßig sind mittels der Justiereinrichtung die Fangdüse oder/und die Treibdüse relativ zueinander verstellbeweglich Somit lässt sich die Beschaffenheit des Milchschaums besonders präzise variieren.

Bei einer weiteren bevorzugten Weiterbildung des Milchschäumers umfasst die Justiereinrichtung einen elektrischen Rotationsantrieb und ein Steuerorgan mit Durchbrüchen. Mittels des elektrischen Rotationsantriebs ist das Steuerorgan um eine Drehachse drehantreibbar. Dabei ist das Steuerorgan teilweise in einem in den Sauganschluss der Strahlpumpe mündenden Saugkanal derart angeordnet, dass die Durchbrüche des Steuerorgans bei Rotation des Steuerorgans den Saugkanal periodisch fluidisch freigeben. Immer, wenn der Saugkanal mittels der Durchbrüche nicht fluidisch freigegeben ist, kann der Saugkanal mittels des Steuerorgans fluidisch verschlossen sein. Das Steuerorgan ist eine Steuerscheibe mit axial ausgenommenen Durchbrüchen oder ein Steuerzylinder mit radial ausgenommenen Durchbrüchen. Der Steuerzylinder umfasst vorzugsweise axial im Abstand zueinander angeordnete umlaufende Reihen an Durchbrüchen je unterschiedlicher Geometrie und ist gegenüber dem Saugkanal zum wahlweisen In-Eingriff-Bringen mit dem Saugkanal einer der Reihen axial verstellbar. Damit kann die Beschaffenheit des Milchschaums besonders feinstufig oder sogar stufenlos variiert werden, indem eine Drehzahl des Steuerorgans verändert wird.

Die Erfindung betrifft ferner eine Heißgetränkezubereitungseinrichtung, insbesondere einen Kaffeevollautomat, die einen erfindungsgemäßen Milchschäumer im Sinne der voranstehenden Beschreibung umfasst. Die oben dargelegten Vorteile des erfindungsgemäßen Milchschäumers übertragen sich daher auch auf die erfindungsgemäße Heißgetränkezubereitungseinrichtung.

Zweckmäßig weist die Heißgetränkezubereitungseinrichtung eine Eingabeeinrichtung zur Eingabe des Konsumentenwunschs auf. Die gewünschte Beschaffenheit des Milchschaums kann dabei mittels der Eingabeeinrichtung direkt eingegeben werden, oder indirekt durch Wahl eines bestimmten Getränketyps, dem in einer Steuer/- Regelungseinrichtung der Heißgetränkezubereitungseinrichtung eine vorbestimmte Beschaffenheit des Milchschaums zugeordnet ist. Eine solche Heißgetränkezubereitungseinrichtung besticht durch ihre intuitive Bedienbarkeit.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der beigefügten Ansprüche zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: beispielhaft einen Aufbau einer erfindungsgemäßen Heißgetränkezubereitungseinrichtung mit einem Beispiel eines erfindungsgemäßen Milchschäumer,
- Fig. 2 und 3: jeweils ein weiteres Beispiel des Milchschäumers gemäß der Erfindung,
- Fig. 4: beispielhaft ein Steuerorgan für den Milchschäumer der Figur 3.

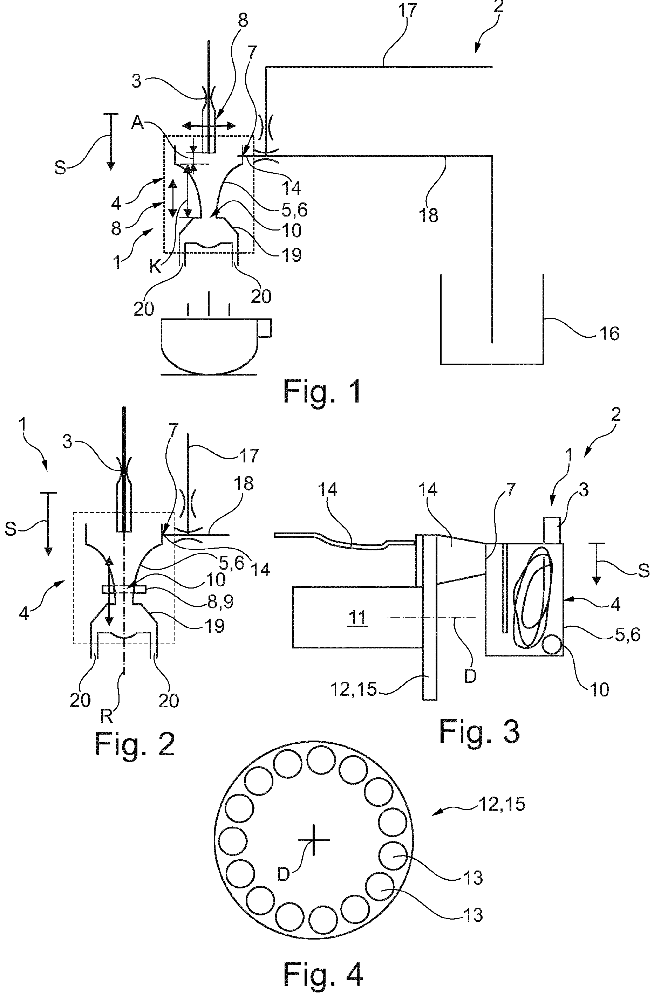

In der Figur 1 ist schematisch ein Aufbau einer erfindungsgemäßen Heißgetränkezubereitungseinrichtung 2 gezeigt, die ein Kaffeevollautomat sein kann. Die Heißgetränkezubereitungseinrichtung 2 umfasst einen Milchbehälter 16 zur Aufnahme von Milch. Die Heißgetränkezubereitungseinrichtung 2 weist außerdem einen erfindungsgemäßen Milchschäumer 1 auf, der in der Figur 1 ebenfalls beispielhaft illustriert ist. Der Milchschäumer 1 umfasst eine Strahlpumpe 4 mit einem Sauganschluss 7, über welchen mittels der Strahlpumpe 4 in einem Milchbehälter 16 der Heißgetränkezubereitungseinrichtung 2 aufgenommene Milch angesaugt werden kann. Der Milchschäumer 1 dient zum Aufschäumen der Milch. Dabei kann mittels des Milchschäumers 1 Milch in Form von Tiermilch - insbesondere Kuhmilch - oder Ersatzmilch - insbesondere Soja-, Hafer-, Reis-, Mandelmilch - aufgeschäumt werden.

Die Figur 1 lässt erkennen, dass die Strahlpumpe 4 des Milchschäumers 1 eine Treibdüse 3 aufweist. Dabei ist im Betrieb des Milchschäumers 1 mittels der Treibdüse 3 Wasserdampf als Treibmedium der Strahlpumpe 4 in Form eines entlang einer Strahlrichtung S austragbaren Treibstrahls entspannbar. Die Strahlpumpe 4 weist außerdem eine sich entlang der Strahlrichtung S verjüngende Fangdüse 5 zum Fangen des Treibstrahls auf. Dabei begrenzt die Fangdüse 5 wenigstens teilweise eine Mischkammer 6 des Milchschäumers 1. Der Sauganschluss 7 der Strahlpumpe 4 mündet quer zur Strahlrichtung S in die Mischkammer 6. In der Mischkammer 6 sind der Wasserdampf des Treibstrahls und ein mittels der Strahlpumpe 4 ansaugbares Gemisch aus Milch und Luft unter Erzeugung des Milchschaums vermengbar.

Im Beispiel der Figur 1 ist an den Sauganschluss 7 ein Saugkanal 14 angeschlossen, in welchen ein Luftkanal 17 und ein Milchkanal 18 münden. Mittels des Milchkanals 18 ist der Milchbehälter 16 beispielsweise über den Saugkanal 14 fluidisch an den Sauganschluss 7 angeschlossen. Dabei weist der Milchschäumer 1 eine verstellbare Justiereinrichtung 8 zum Variieren einer Beschaffenheit - beschreibbar durch eine Qualität und Konsistenz - des mittels des Milchschäumers 1 erzeugbaren Milchschaums auf. Die Justiereinrichtung 8 ist beispielsweise manuell oder mechanisch oder hydromechanisch verstellbar.

Dem Beispiel der Figur 1 entsprechend ist ein zwischen der Treibdüse 3 und der Fangdüse 5 entlang der Strahlrichtung S gemessener Düsenabstand A mittels der Justiereinrichtung 8 veränderbar ausgebildet. Die Mischkammer 6 erstreckt sich entlang der Strahlrichtung S über eine Kammerhöhe K, die alternativ oder zusätzlich zum Düsenabstand A mittels der Justiereinrichtung 8 veränderbar ist. Die Variabilität des Düsenabstand A und der Kammerhöhe K sind in der Figur 1 exemplarisch mittels eines Doppelpfeils veranschaulicht.

Die Figur 2 veranschaulicht ein weiteres Beispiel des erfindungsgemäßen Milchschäumers 1 für die erfindungsgemäße Heißgetränkezubereitungseinrichtung 2. Der Figur 2 entsprechend umfasst die Fangdüse 5 zumindest bereichsweise ein flexibles Material oder besteht zumindest bereichsweise aus dem flexiblen Material, sodass mittels der Justiereinrichtung 8 eine Geometrie der Fangdüse 5 durch wenigstens bereichsweise Deformation der Fangdüse 5 verändert werden kann. Beispielsweise umfasst die Justiereinrichtung 8 einen Ring 9, dessen Rotationssymmetrieachse R parallel zur Strahlrichtung S verläuft. Der Ring 9 fasst eine Engstelle 10 der Fangdüse 5 festlegend die Fangdüse 5 ein. Dabei ist eine Position des Rings 9 der Justiereinrichtung 8 relativ zur Fangdüse 5 entlang der Strahlrichtung S verstellbar, sodass eine Position der Engstelle 10 in der Fangdüse 5 bezüglich der Strahlrichtung S mittels der Justiereinrichtung 8 veränderbar ist. Diese Verstellbeweglichkeit des Rings 9 ist in der Figur 2 mittels eines Doppelpfeils veranschaulicht. Dabei kann die Fangdüse 3 - alternativ oder zusätzlich - zur Veränderung ihrer Geometrie mittels der Justiereinrichtung 8 entlang der Strahlrichtung S wahlweise dehnbar- oder stauchbar ausgebildet sein.

Figur 1 lässt ferner erkennen, dass mittels der Justiereinrichtung 8 eine zur Fangdüse 5 relative Position der Treibdüse 3 quer zur Strahlrichtung S verändert werden kann. Dabei können die Fangdüse 5 sowie - alternativ oder zusätzlich - die Treibdüse 3 relativ zueinander verstellbeweglich sein. Diese Verstellbeweglichkeit der Fang- bzw. Treibdüse 5, 3 ist in der Figur 1 mittels eines weiteren Doppelpfeils veranschaulicht.

In der Figur 3 ist ein weiteres Beispiel des erfindungsgemäßen Milchschäumers 1 für die erfindungsgemäße Heißgetränkezubereitungseinrichtung 2 dargestellt. Gemäß diesem Beispiel umfasst die Justiereinrichtung 1 einen elektrischen Rotationsantrieb 11 und ein Steuerorgan 14. Ein solches Steuerorgan 14 ist zur besseren Anschaulichkeit gesondert in der Figur 4 gezeigt, welche erkennen lässt, dass das Steuerorgan 12 Durchbrüche 13 aufweist. Das Steuerorgan 12 ist mittels des elektrischen Rotationsantriebs 11 um eine Drehachse D drehantreibbar. Das Steuerorgan 12 ist teilweise in einem Saugkanal 14, der in den Sauganschluss 7 der Strahlpumpe 4 mündet, so angeordnet, dass die Durchbrüche 13 des Steuerorgans 12 bei Rotation des Steuerorgans 12 den Saugkanal 14 periodisch im Wechsel mit einem Verschluss des Saugkanals 14 durch das Steuerorgan 12 fluidisch freigeben. Der Saugkanal 14 überstreicht bei Rotation des Steuerorgans 12 die Durchbrüche 13.

Im Beispiel der Figuren 3 und 4 ist das Steuerorgan 12 eine Steuerscheibe 15 mit axial ausgenommenen Durchbrüchen 13. Alternativ kann das Steuerorgan 12 ein Steuerzylinder mit radial ausgenommenen Durchbrüchen 13 sein, was in den Figuren aber nicht veranschaulicht ist. Ein solcher Steuerzylinder kann axial zueinander im Abstand angeordnete umlaufende Reihen an Durchbrüchen 13 aufweisen, wobei die Durchbrüche einer Reihe jeweils eine Geometrie aufweisen, die von der Geometrie der Durchbrüche der anderen Reihe bzw. Reihen verschieden ist. Der Steuerzylinder kann gegenüber dem Saugkanal 14 axial verstellbar sein, sodass je eine der Reihen wahlweise mit dem Saugkanal 14 in Eingriff gebracht werden kann.

Bei den Beispielen der Figuren 3 und 4 kann durch die Wahl der Drehzahl, mit welcher das Steuerorgan 12 mittels des Rotationsantriebs 11 drehangetrieben wird, die Beschaffenheit des Milchschaums beeinflusst werden.

### Bezugszeichenliste

- 1: Milchschäumer
- 2: Heißgetränkezubereitungseinrichtung
- 3: Treibdüse
- 4: Strahlpumpe
- 5: Fangdüse
- 6: Mischkammer
- 7: Sauganschluss
- 8: Justiereinrichtung
- 9: Ring
- 10: Engstelle
- 11: Rotationsantrieb
- 12: Steuerorgan
- 13: Durchbruch
- 14: Saugkanal
- 15: Steuerscheibe
- 16: Behälter
- 17: Luftkanal
- 18: Milchkanal
- 19: Austragsteil
- 20: Austragsöffnung

- A: Düsenabstand
- D: Drehachse
- K: Kammerhöhe
- R: Rotationssymmetrieachse
- S: Strahlrichtung

## Patentansprüche

1. Milchschäumer (1) zum Aufschäumen von Milch für eine Heißgetränkezubereitungseinrichtung (2), insbesondere für einen Kaffeevollautomaten; mit einer eine Treibdüse (3) umfassenden Strahlpumpe (4), wobei im Betrieb des Milchschäumers (1) mittels der Treibdüse (3) Wasserdampf als Treibmedium der Strahlpumpe (4) in Form eines entlang einer Strahlrichtung (S) austragbaren Treibstrahls entspannbar ist; wobei die Strahlpumpe (4) eine sich entlang der Strahlrichtung (S) verjüngende Fangdüse (5) zum Fangen des Treibstrahls aufweist, wobei die Fangdüse (5) wenigstens teilweise eine Mischkammer (6) des Milchschäumers (1) begrenzt; wobei ein Sauganschluss (7) der Strahlpumpe (4) , insbesondere quer zur Strahlrichtung (S), in die Mischkammer (6) mündet, sodass in der Mischkammer (6) der Wasserdampf des Treibstrahls und ein mittels der Strahlpumpe (4) ansaugbares Gemisch aus Milch und Luft unter Erzeugung des Milchschaums vermengbar sind; wobei ein Luftkanal (17) und ein Milchbehälter (16) zur Aufnahme von Milch und/oder ein Milchkanal (18) an den Sauganschluss (7) der Strahlpumpe (4) fluidisch angeschlossen ist, und wobei der Milchschäumer (1) eine zum Variieren einer Beschaffenheit des Milchschaums, insbesondere manuell oder mechanisch oder hydromechanisch, verstellbare Justiereinrichtung (8) aufweist.

2. Milchschäumer (1) nach Anspruch 1, **dadurch gekennzeichnet, dass** ein zwischen der Treibdüse (3) und der Fangdüse (5) entlang der Strahlrichtung (S) gemessener Düsenabstand (A) mittels der Justiereinrichtung (8) veränderbar ausgebildet ist.

3. Milchschäumer (1) nach Anspruch 1 oder 2, **dadurch gekennzeichnet, dass** die Mischkammer (6) sich entlang der Strahlrichtung (S) über eine mittels der Justiereinrichtung (8) veränderbare Kammerhöhe (K) erstreckt.

4. Milchschäumer (1) nach einem der Ansprüche 1 bis 3, **dadurch gekennzeichnet, dass** die Fangdüse (5) zumindest bereichsweise mit oder aus einem flexiblen Material ausgebildet ist, so dass mittels der Justiereinrichtung (8) eine Geometrie der Fangdüse (5) durch wenigstens bereichsweise Deformation der Fangdüse (5) verändert werden kann.

5. Milchschäumer (1) nach Anspruch 4, **dadurch gekennzeichnet, dass** die Justiereinrichtung (8) einen Ring (9) umfasst, dessen Rotationssymmetrieachse (R) parallel zur Strahlrichtung (S) verläuft; der Ring (9) die Fangdüse (5) eine Engstelle (10) der Fangdüse (5) festlegend einfasst; eine Position des Rings (9) der Justiereinrichtung (8) relativ zur Fangdüse (5) entlang der Strahlrichtung (S) verstellbar ist, sodass eine Position der Engstelle (10) in der Fangdüse (5) bezüglich der Strahlrichtung (S) mittels der Justiereinrichtung (8) veränderbar ist.

6. Milchschäumer (1) nach Anspruch 4 oder 5, bei Rückbezug auf Anspruch 3, **dadurch gekennzeichnet, dass** zur Veränderung der Geometrie der Fangdüse (5) die Fangdüse (5) mittels der Justiereinrichtung (8) entlang der Strahlrichtung (S) wahlweise dehn- oder stauchbar ausgebildet ist.

7. Milchschäumer (1) nach einem der vorhergehenden Ansprüche, **dadurch gekennzeichnet, dass** mittels der Justiereinrichtung (8) eine zur Fangdüse (5) relative Position der Treibdüse (3) quer zur Strahlrichtung (S) veränderbar ist.

8. Milchschäumer (1) nach Anspruch 6, **dadurch gekennzeichnet, dass** mittels der Justiereinrichtung (8) die Fangdüse (5) oder/und die Treibdüse (3) relativ zueinander verstellbeweglich sind.

9. Milchschäumer (1) nach einem der vorhergehenden Ansprüche, **dadurch gekennzeichnet, dass** die Justiereinrichtung (8) einen elektrischen Rotationsantrieb (11) und ein Steuerorgan (12) mit Durchbrüchen (13) umfasst; mittels des elektrischen Rotationsantriebs (11) das Steuerorgan (12) um eine Drehachse (D) drehantreibbar ist; das Steuerorgan (12) teilweise in einem in den Sauganschluss (7) der Strahlpumpe (4) mündenden Saugkanal (14) so angeordnet ist, dass die Durchbrüche (13) des Steuerorgans (12) bei Rotation des Steuerorgans (12) den Saugkanal (14) periodisch fluidisch freigeben; das Steuerorgan (12) eine Steuerscheibe (15) mit axial ausgenommenen Durchbrüchen (13) oder ein Steuerzylinder mit radial ausgenommenen Durchbrüchen (13) ist, der vorzugsweise axial im Abstand zueinander angeordnete umlaufende Reihen an Durchbrüchen (13) je unterschiedlicher Geometrie umfasst und der gegenüber dem Saugkanal (14) zum wahlweisen In-Eingriff-Bringen mit dem Saugkanal (14) einer der Reihen axial verstellbar ist.

10. Heißgetränkezubereitungseinrichtung (2), insbesondere Kaffeevollautomat, mit einem Milchschäumer (1) nach einem der vorhergehenden Ansprüche.

## Claims

1. Milk frother (1) for frothing milk for a hot beverage preparation device (2), in particular for a fully automatic coffee machine having a jet pump (4) comprising a propulsion nozzle (3), wherein during operation of the milk frother (1) steam can be released by means of the propulsion nozzle (3) as a propellant of the jet pump (4) in the form of a propulsion jet which can be discharged along a jet direction (2); wherein the jet pump (4) has a collection nozzle (5), which tapers along the jet direction (S), for collecting the propulsion jet, wherein the collection nozzle (5) at least partially delimits a mixing chamber (6) of the milk frother (1); wherein a suction connection (7) of the jet pump (4), in particular transversely to the jet direction (S), opens into the mixing chamber (6), so that the steam of the propulsion jet and a mixture of milk and air which can taken in by means of the jet pump (4) can be mixed in the mixing chamber (6), in turn generating the milk froth; wherein an air duct (17) and a milk container (16) for receiving milk and/or a milk duct (18) is fluidically connected to the suction connection (7) of the jet pump (4), and wherein the milk frother (1) has an adjustment facility (8) which can be adjusted in particular manually or mechanically or hydromechanically in order to vary a consistency of the milk froth.

2. Milk frother (1) according to claim 1, **characterised in that** a nozzle distance (A) measured between the propulsion nozzle (3) and the collection nozzle (5) along the jet direction (S) is embodied to be changeable by means of the adjustment facility (8).

3. Milk frother (1) according to claim 1 or 2, **characterised in that** the mixing chamber (6) extends along the jet direction (S) above a chamber height (K) which can be changed by means of the adjustment facility (8).

4. Milk frother (1) according to one of claims 1 to 3, **characterised in that** the collection nozzle (5) is embodied at least in regions with or from a flexible material so that a geometry of the collection nozzle (5) can be changed by means of the adjustment facility (8) by a deformation of the collection nozzle (5) at least in regions.

5. Milk frother (1) according to claim 4, **characterised in that** the adjustment facility (8) comprises a ring (9), the axis of rotational symmetry (R) of which runs parallel to the jet direction (S); the ring (9) the nozzle (5) encompasses a constriction (10) of the collection nozzle (5) in a fixed manner; a position of the ring (9) of the adjustment facility (8) can be adjusted relative to the collection nozzle (5) along the jet direction (S), so that a position of the constriction (10) in the collection nozzle (5) with respect to the jet direction (S) can be changed by means of the adjustment facility (8).

6. Milk frother (1) according to claim 4 or 5, with reference to claim 3, **characterised in that** in order to change the geometry of the collection nozzle (5), the collection nozzle (5) is optionally embodied to be extendable or stowable along the jet direction (S) by means of the adjustment facility (8).

7. Milk frother (1) according to one of the preceding claims, **characterised in that** a position of the propulsion nozzle (3) transverse to the jet direction (S) and relative to the collection nozzle (5) can be changed by means of the adjustment facility (8).

8. Milk frother (1) according to claim 6, **characterised in that** the collection nozzle (5) and/or the propulsion nozzle (3) are moveable relative to one another by means of the adjustment facility (8).

9. Milk frother (1) according to one of the preceding claims, **characterised in that** the adjustment facility (8) comprises an electrical rotary drive (11) and a control organ (12) with apertures (13); by means of the electrical rotary drive (11) the control organ (12) can be rotationally driven about an axis of rotation (D); the control organ (12) is arranged partially in a suction duct (14) which opens into the suction connection (7) of the jet pump (4) so that the apertures (13) of the control organ (12) periodically fluidically unblock the suction duct (14) during rotation of the control organ (12); the control organ (12) is a control disc (15) with axially received apertures (13) or a control cylinder with radially received apertures (13), which preferably comprises rows of apertures (13) arranged axially at a distance from one another dependent on the different geometry and which can be axially moved with respect to the suction duct (14) for optional engagement with the suction duct (14) of one of the rows.

10. Hot beverage preparation facility (2), in particular fully automatic coffee machine, having milk frother (1) according to one of the preceding claims.

## Revendications

1. Dispositif de moussage de lait (1) pour faire mousser du lait pour un dispositif de préparation de boissons chaudes (2), en particulier pour une machine à café automatique, comprenant une pompe à jet (4) comportant une buse d'expulsion (3), dans lequel, lors du fonctionnement du dispositif de moussage de lait (1), de la vapeur d'eau peut être détendue au moyen de la buse d'expulsion (3) à titre de fluide de propulsion de la pompe à jet (4) sous forme d'un jet de propulsion pouvant être distribué le long d'une direction de jet (S),
dans lequel la pompe à jet (4) comprend une buse réceptrice (5) se rétrécissant le long de la direction de jet (S) destinée à capter le jet de propulsion,
dans lequel la buse réceptrice (5) délimite au moins en partie une chambre de mélange (6) du dispositif de moussage de lait (1),
dans lequel un raccord d'aspiration (7) de la pompe à jet (4) débouche dans la chambre de mélange (6), en particulier transversalement à la direction de jet (S), de telle sorte que, dans la chambre de mélange (6), la vapeur d'eau du jet de propulsion et un mélange de lait et d'air pouvant être aspiré au moyen de la pompe à jet (4) peuvent être mélangés en produisant de la mousse de lait,
dans lequel un conduit d'air (17) et un réservoir à lait (16) pour recevoir le lait et/ou un conduit de lait (18) sont raccordés fluidiquement au raccord d'aspiration (7) de la pompe à jet (4), et
dans lequel le dispositif de moussage de lait (1) comprend un dispositif d'ajustement (8) réglable en particulier manuellement ou mécaniquement ou hydromécaniquement pour faire varier une consistance de la mousse de lait.

2. Dispositif de moussage de lait (1) selon la revendication 1, **caractérisé en ce qu'**un intervalle de buses (A) mesuré entre la buse d'expulsion (3) et la buse réceptrice (5) le long de la direction de jet (S) est formé de façon à pouvoir être modifié au moyen du dispositif d'ajustement (8).

3. Dispositif de moussage de lait (1) selon la revendication 1 ou 2, **caractérisé en ce que** la chambre de mélange (6) s'étend le long de la direction de jet (S) sur une hauteur de chambre (K) pouvant être modifiée au moyen du dispositif d'ajustement (8).

4. Dispositif de moussage de lait (1) selon l'une des revendications 1 à 3, **caractérisé en ce que** la buse réceptrice (5) est formée au moins en partie avec ou en un matériau flexible, de sorte qu'au moyen du dispositif d'ajustement (8), une géométrie de la buse réceptrice (5) peut être modifiée par une déformation au moins par section de la buse réceptrice (5).

5. Dispositif de moussage de lait (1) selon la revendication 4, **caractérisé en ce que** le dispositif d'ajustement (8) comprend une bague (9) dont l'axe de symétrie de rotation (R) est parallèle à la direction de jet (S), la bague (9) entoure la buse réceptrice (5), en délimitant un point de rétrécissement (10) de la buse réceptrice (5), et une position de la bague (9) du dispositif d'ajustement (8) par rapport à la buse réceptrice (5) est réglable le long de la direction de jet (S), de telle sorte qu'une position du point de rétrécissement (10) dans la buse réceptrice (5) par rapport à la direction du jet (S) peut être modifiée au moyen du dispositif d'ajustement (8).

6. Dispositif de moussage de lait (1) selon la revendication 4 ou 5, lorsqu'elle dépend de la revendication 3, **caractérisé en ce que**, pour modifier la géométrie de la buse réceptrice (5), la buse réceptrice (5) est formée de façon à être sélectivement extensible ou compressible le long de la direction de jet (S) au moyen du dispositif d'ajustement (8).

7. Dispositif de moussage de lait (1) selon l'une des revendications précédentes, **caractérisé en ce qu'**une position relative de la buse d'expulsion (3) par rapport à la buse réceptrice (5) peut être modifiée au moyen du dispositif d'ajustement (8) transversalement à la direction de jet (S).

8. Dispositif de moussage de lait (1) selon la revendication 6, **caractérisé en ce que** la buse réceptrice (5) et/ou la buse d'expulsion (3) peuvent être déplacées et sont réglables l'une par rapport à l'autre au moyen du dispositif d'ajustement (8).

9. Dispositif de moussage de lait (1) selon l'une des revendications précédentes, **caractérisé en ce que** :
le dispositif d'ajustement (8) comprend un entraînement rotatif (11) électrique et un organe de commande (12) comprenant des perforations (13),
au moyen de l'entraînement rotatif électrique (11), l'organe de commande (12) peut être entraîné en rotation autour d'un axe de rotation (D),
l'organe de commande (12) est disposé en partie dans un conduit d'aspiration (14) débouchant dans le raccord d'aspiration (7) de la pompe à jet (4), de telle sorte que les perforations (13) de l'organe de commande (12), lors de la rotation de l'organe de commande (12), libèrent périodiquement fluidiquement le conduit d'aspiration (14), l'organe de commande (12) est un disque de commande (15) comprenant des perforations (13) vidées axialement ou un cylindre de commande comprenant des perforations (13) vidées axialement, qui comprend des séries périphériques de perforations (13) disposées à distance l'une de l'autre, de préférence axialement, ayant chacune une géométrie différente, et qui est réglable axialement par rapport au conduit d'aspiration (14) pour mettre en prise sélectivement l'une des séries avec le conduit d'aspiration (14).

10. Dispositif de préparation de boissons chaudes (2), en particulier machine à café automatique, comprenant un dispositif de moussage de lait (1) selon l'une des revendications précédentes.
